# EUROPÄISCHE PATENTANMELDUNG

(11) **EP 0 925 913 A1**
(43) Veröffentlichungstag der Anmeldung: **30.06.1999**
(21) Anmeldenummer: 98124618.4
(22) Anmeldetag: 23.12.1998
(51) Int. Cl.: B32B 27/34, C08L 73/00, F16L 9/133, F16L 9/12, B32B 27/08, C08G 67/02

(54) **Thermoplastische Mehrschichtverbunde die ein lineares alternierendes Polymer aus Kohlenmonoxid und einer ethylenisch ungesättigten Verbindung enthalten**

(30) Priorität: 23.12.1997 DE 19757606
(71) Anmelder: EMS-INVENTA AG, 8002 Zürich (CH)
(72) Erfinder: Stöppelmann, Georg Dr.rer.nat., 7402 Bonaduz (CH); Hewel, Manfred Dr. rer. nat., 7415 Rodels (CH)
(74) Vertreter: Kirschner, Klaus Dieter, Dipl.-Phys.

(57) **Zusammenfassung**

Die Erfindung betrifft neue thermoplastische Mehrschichtverbunde enthaltend mindestens (a) eine Schicht aus einer Formmasse auf Basis von Polyamid und (b) einer zweiten Schicht gemäß (a) wenigstens teilweise benachbarten Schicht aus einer Formmasse auf Basis eines linearen alternierenden Polyketonpolymers aus Kohlenmonoxyd und einer ethylenisch ungesättigten Kohlenwasserstoffverbindung.

## Beschreibung

Die vorliegende Erfindung betrifft thermoplastische Mehrschichtverbunde.

Polyamide (im folgenden auch kurz PA genannt) besitzen grundsätzlich gute mechanische Eigenschaften, insbesondere eine gute Zähigkeit, zeigen jedoch eine schlechte Sperrwirkung; so können polare Substanzen leicht durch Polyamide migrieren. Dies ist beispielsweise bei Kraftstoffleitungen, in denen alkoholhaltiger Kraftstoff gefördert wird, äußerst nachteilig.

Ketonharze sind aus der alkalisch katalysierten Selbstkondensation von Ketonen (Cyclohexanon, Methylcyclohexanon) oder Mischkondensation von Ketonen (Aceton, Butanon, Acetophenon, Cyclohexanon, Methylcyclohexanon) mit Formaldehydresultierende, unverseifbare und neutral reagierende Harze (Kunstharze) von heller Farbe und Erweichungsbereichen von ca. 80-130°. Mischkondensate von Ketonen (z.B. Cyclohexanon) mit längerkettigen Aldehyden haben keine technische Bedeutung. In Abhängigkeit vom Ausgangsketon unerteilt man die Ketone in Aceton-, Acetonphenon-Harze usw. Auch Ketone aus Mischungen unterschiedlicher Ketone sind bekannt.

Polyketon-Polymere (im folgenden auch kurz PK genannt) sind im Stand der Technik bekannt. Beispielsweise beschreibt US-A-4,880,903 lineare alternierende Polyketonterpolymere auf Basis von Kohlenmonoxidethylen und anderen olefinisch untergesättigten Kohlenwasserstoffen, wie Propylen.

US-A-4,843,144 beschreibt ein Verfahren zur Herstellung von linearen alternierenden Polyketon-Polymeren aus Kohlenmonoxid und wenigstens einem ethylenisch ungesättigten Kohlenwasserstoff unter Verwendung von Palladiumkatalysatoren.

Andere aliphatische Polyketone auf Basis auf Ethylen, Kohlenmonoxid und Propylen werden z.B. in EP-A-457 374 und EP-A-569 101 beschrieben und werden unter verschiedenen Handelsnamen auf dem Markt angeboten.

In der US 5,232,786 werden Mehrschicht-Strukturen beschrieben, die aliphatische Polyketone und Polyamide enthalten. Die einzelnen Schichten besitzen allerdings nur eine sogenannte mechanische Bindung die dadurch gekennzeichnet ist, dass sich die einzelnen Schichten von Hand wieder leicht trennen lassen. für den Praxisgebrauch, speziell für Anwendungen im Automobilbau bei denen Schläuche und Rohre ständig in Kontakt mit Kraftstofen sind, ist aber eine dauerhafte Verbindung, die auch durch äußere Einflüsse nicht getrennt wird, erforderlich. In US 5,232,786 wird weiterhin ein Terpolymer auf Basis von PA6, PA66 und PA12 erwähnt, dass eine nicht trennbare Verbindung zum Polyketon ergibt. Copolymere haben aber den Nachteil, dass sie tiefe Schmelzpunkte, geringe Kristallinität und eine schlechte Kristallisationsfähigkeit besitzen, was zu einer reduzierten Benzinbeständigkeit und zu einer langsamen Verarbeitung führt.

In der EP 0 569 101 werden Mehrschichtsysteme aus Polyketonpolymeren (PK) und Polyamiden (PA) beschreiben, die einpolymerisierte Einheiten aus Hexamethylendiamin und Adipinsäure enthalten. Allerdings lassen sich die Schichten von Rohren, die aus diesen beiden materialien hergestellt werden, von Hand trennen. Solche Verbundfestigkeiten reichen allerdings nicht, wenn speziell für Kraftstoff führende Systeme Rohre oder Schläuche hergestellt werden müssen. Die durch Benzinkontakt auftretenden Quellspannungen führen dann zur Delamination der Schichten.

Verbundwerkstoffe aus Polyamid und Polyketonolymeren mit einer Stoffschlüssigen Verbindung der Schichten sind bislang nicht bekannt. In dem Stand der Technik gibt es daher lediglich Anwendungen die Zwischenschichten aus Polyamiden und Polyketonen Haftvermittler oder Verträglichkeitsvermittlerschichten vorsehen, um eine Kraftschlüssige Verbindung zu erreichen. Ein Kraftschlüssiger thermoplastischer Merschichtverbund ist, bei technischen Anwendungen, z.B. bei Kraftfahrzeugleitungen unbedingt erforderlich.

Daher ist es Aufgabe der Erfindung, thermoplastische Mehrschichtverbunde bereitzustellen, wobei erstmals eine Polyamidschicht mit einer Polyketonschicht kraftschlüssig verbunden ist.

Diese Aufgabe wird durch den erfindungsgemäßen thermoplastischen Mehrschichtverbund gemäß Anspruch 1 gelöst, der mindestens eine Schicht aus (a) einer Formmasse auf Basis von Polyamid und (b) einer zweiten zur Schicht gemäß (a) wenigstens teilweise benachbarten Schicht auf Basis einer Formmasse auf Basis eines linearen alternierenden Polyketonpolymers aus Kohlenmonoxyd und einer ethylenisch ungesättigten Kohlenwasserstoffverbindung enthält. Aufgrund des erfindungsgemäß eingesetzten speziellen Polyamids, das ein Verhältnis von Amino zu Carboxylgruppen von größer als 1 aufweist, ist es erfindungsgemäß erstmals möglich, Polyamid mit Polyketonschichten ohne dazwischen liegende Haftvermittlerschichten kraftschlüssig zu verbinden.

In den Unteransprüchen sind vorteilhafte Ausführungsformen der Erfindung enthalten.

Der Mehrschichtverbund kann auch die Form einer Schlauch- oder Rohrleitung aufweisen (Anspruch 13). In diesem Falle bildet die PK-Schicht die Innenschicht. Benachbart zu ihr ist wenigstens eine PA-Schicht.

Für die Polyamide der Schicht (a) kommen in erster Linie aliphatische Mono- und Copolymere in Frage. Als Beispiel seien PA6, PA66, PA612, PA8, PA88, PA9, PA11, PA12, PA1212, PA1012, PA1112 und ähnliche genannt. Die Kennzeichnung der Polyamide entspricht internationaler Norm, wobei die erste Ziffer (n) die C Atomzahl des Ausgangsdiamins und die letzte (n) Ziffer (n) die C Atomzahl der Dicarbonsäure angeben. Wird nun eine Zahl genannt, so bedeutet dies, daß von a, w-Aminocarbonsäure bzw. von dem davon abgeleiteten Lactam ausgegangen wurde.

Sofern Copolymere verwendet werden, können diese z.B. Adipinsäure Sebazinsäure, Korksäure, Isophthalsäure, Terephthalsäure als Cosäure bzw. -(4'-Aminocyclohexyl)-methan, Trimethylhexamethylendiamin, Hexamethylendiamon oder ähnliche als Codiamin enthalten.

Die Herstellung dieser Copolyamide ist z.B. aus DEAS 2152194 bekannt.

Ebenfalls geeignet als Polyamide sind gemischte aliphate/aromatische Polykondensate wie sie z.B. in den USPSsen 2,071,250, 2,071,251 et al beschrieben sind. Als Polyamide geeignete Polykondensate sind gleichfalls Poly(etheresteramide) bzw. Poly(etheramide) geeignet. Derartige Produkte werden z.B. in DEOS 2712987 beschrieben.

Sofern es erforderlich ist, können die Polyamide schlagzäh eingestellt werden. Geeignete Modifier sind z.b. Ethylen/Propylen- oder Ethylen/Propylen-Dien-Copolymere oder auch schlagzäh machende Kautschukke.

Die im erfindungsgemäße Mehrschichtverbund enthaltenen Polyketone sind durch die folgende allgemeine Formel I gekennzeichnet 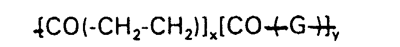 worin G abgeleitet ist von einem α-Olefin-Monomer mit wenigstens 3 Kohlenstoffatomen, die durch wenigstens eine oder mehrere ethylenisch ungestättigte Bindung(en) miteinander verbunden sind, x und y ganze Zahlen sind, und das Verhältnis von y zu x nicht mehr als 0,5 ist.

Insbesondere ist das Polymer G in Formel I Propylen und das Verhältnis von y zu x zwischen 0.01 und 0,1.

Das erfindungsgemäße Polyketon ist dadurch gekennzeichnet, daß es ein alternierendes Copolymer aus Ethylen und Kohlenmonoxyd ist, wobei ein weiteres Olefin wie beispielsweise Propylen oder Butylen einpolymerisiert sein kann.

Im erfindungsgemäßen Mehrschichtverbund werden insbesondere Polyketon-polymere mit einem Schmelzpunkt von 175°C bisd 300°C, insbesondere von 210°C bis 270°C eingesetzt. Die Polymere haben typischerweise eine limitierende Viskositätzahl (LVN), gemessen in m-Kresol bei 60°C, 0,5 dl/g bis 10 dl/g, vorzugsweise von 0,8 dl/g bis 4 dl/g.

Polyketonpolymere sind im Stand der Technik z.B. aus US 4,880,903 sowie aus US 4,843,144 bekannt.

Neben den erfindungsgemäßen Schichten gemäß (a) und (b) können die thermoplastischen Mehrschichtverbunde eine weitere Schicht (c) aufweisen. Diese ist zur Schicht gemäß (a) benachbart, und zwar gegenüberliegend bezogen auf die Schicht gemäß (b) angeordnet. Die Schicht gemäß (c) ist ebenfalls mit der Schicht gemäß (a) stoffschlüssig bzw. kraftschlüssig verbunden. Offensichtlich findet eine chemische Reaktion zwischen dem erfindungsgemäßen Polyamid mit Amino-Endgruppenüberschuss und dem Polyketonpolymeren in der Grenzschicht statt. Wird nämlich ein Polyamid ohne Aminoendgruppenüberschuss zusammen mit einer Polyketonschicht eingesetzt, läßt sich beispielsweise nach dem Extrusionsprozess keine ausreichende Haftung erziehlen.

Die Formmassen für die Schichten (a), (b) und (c) können übliche Hilfsmittel und Zusatzstoffe wie z.B. Flammschutzmittel, Stabilisatoren, Weichmacher, Verarbeitungshilfsmittel, Viskositätsverbesserer, Füllstoffe, hier insbesondere solche zur Verbesserung der Leitfähigkeit, Pigmente oder ähnliches zugefügt werden. Die Menge der vorgenannten Mittel ist so zu dosieren, daß die gewünschten Eigenschaften nicht ernsthaft beeinflußt werden.

Die Herstellung der thermoplastischen Mehrschichtverbunde kann ein- oder mehrstufig erfolgen. Bei einem einstufigen Extrusionsverfahren werden üblicherweise die verschiedenen Schmelzen koextrudiert. Beim einstufigen Spritzgießverfahren bringt man die verschiedenen Schmelzen in einer Form zusammen und läßt das Formteil erkalten (Mehrkomponenten Spritzguss).

Bei einem mehrstufigen Verfahren wird zunächst ein Formteil aus einer der Komponenten (a), (b) oder (c) hergestellt und dann mit den übrigen Komponenten durch Pressen, Spritzgießen oder Extrudieren verbunden.

Die erfindungsgemäßen thermoplastischen Mehrschichtverbunde weisen in hervorraggendem Maße eine gute Beständigkeit sowie Sperrwirkung gegenüber chemischen Reagenzien, Lösungsmitteln und Kraftstoffen auf. Ferner sind die Schichten kraftschlüssig miteinander verbunden, so daß bei thermischer Ausdehnung oder Biegen oder Quellung in Lösungsmitteln keine Trennung der verschiedenen Schichten voneinander auftritt.

Die erfindungsgemäßen Mehrschichtverbunde finden bei Konstruktionsteilen vor allem im Bereich der Elektro-, Maschinenbau- und Automobilindustrie dort Verwendung, wo die Sperrwirkung des Polyketons mit den guten mechanischen Eigenschaften des Polyamids, insbesondere der gute kälteschlagzähigkeit kombiniert werden soll oder wo mangelnde chemische Beständigkeit durch eine Schicht aus Polyketon ausgeglichen werden soll.

Die nachfolgenden Beispiele erläutern die Erfindung ohne sie zu beschränken (erfindungsgemäße Ausführungsbeispiele im vergleich zu nicht erfindungsgemäßen Beispielen).

### Eingesetzte Materialien:

Aliphatisches Polyketon auf Basis von Ethylen, Kohlenmonoxid und Propylen, im folgenden Polyketon 1 (PK 1) genannt.

| | |
|---|---|
| Schmelzpunkt | 225°C |
| relative Viskosität in 0.5% m-Kresol | 2,20 |
| Melt volume index (MVI) 240°C, 5 kg | 13 cm³/10 min |

Polyamide: PA1, PA2) auf Basis von Laurinlactam, die in der nachfolgenden Tabelle charakterisiert sind:

| | Schmelzpunkt (°C) | relative Viskosität | COOH-Endgruppen (µÄq/g) | NH₂-Endgruppen (µÄq/g) | MVI (cm³/10min) |
|---|---|---|---|---|---|
| PA1 | 178 | 2.25 | 15 | 45 | 30 275°C, 5 kg |
| PA2 | 178 | 2.25 | 40 | 30 | 20 275°C, 5 kg |

Aus diesen Materialien wurden 8X1 mm-Zweischichtrohre hergestellt, wobei innen 0.3 mm PK und aussen 0.7 mm PA12 verwandt wurden. Die Verarbeitungstemperaturen lagen dabei zwischen 230 und 240°C. Bei Verwendung von einem PA 12 mit aussgeglichener Endgruppenzahl (L25) lassen sich die einzelnen Schichten trennen. Hierzu wird ein spiralförmiger Schnitt entlang der Rohraussenwand durchgeführt. Anschliessend wird in Längsrichtung des Prüfteils geschnitten und an den so enstandenen beiden Enden gezogen.

Wird dagegen ein PA mit Aminogruppen-Überschuss auf das PK coextrudiert, ergibt sich eine solch starke Haftung, dass weder mechanisch noch durch Lagerung in FAM B (DIN 51604: 42.25% Toluol, 25.35% Isooctan, 12.68% Diisobutan, 4.23% Ethanol, 15% Methanol und 0.5% Wasser) bei 60°C über 1000h die Schichten sich trennen lassen.

Weiterhin wurde ein Zweischichtwellrohr aus einem PK und einem PA mit Aminogruppen-Überschuss hergestellt, dessen Schichten sich ebenfalls nicht trennen lassen. Die Verarbeitungstemperaturen lagen dabei ebenfalls zwischen 230 und 240°C.

Es sind natürlich auch Rohre mit mehr als 2 Schichten möglich, insofern dass die Abfolge der beiden oberen Schichten eingehalten wird. Im Anschluss an das erfindungsmässe PA können mit diesem verträgliche weitere PA oder andere Polymere folgen, wobei die üblichen Additive wie Stabilisatoren, Weichmacher, Russ, Schlagzähmodifikatoren und Füllstoffe enthalten sein können.

Die Eigenschaften der erfindungsgemässen 8×1-mmZweischichtrohre sind mit einem Polyketon- und einem weichgemachten PA 12-Monorohr in der nachfolgenden Tabelle verglichen. Das nicht erfindungsgemässe Zweischicht-Rohr wurde wegen mangelnder Haftung der beiden Schichten nicht weiter geprüft.

| | Monorohr PA12, weichgemacht | Monorohr Polyketon | Zweischichtrohr PA12/Polyketon |
|---|---|---|---|
| Kälteschlag DIN7337 | ohne Bruch | 100% Bruch | ohne Bruch |
| Berstdruck (bar) | 64 | 90 | 150 |

## Patentansprüche

1. Thermoplastischer Mehrschichtverbund enthaltend mindestens
(a) eine Schicht aus einer Formmasse auf Basis von Polyamid,
wobei das Polyamid ein Verhältnis von Amino- zu Carboxyl-Endgruppen von größer als 1 aufweist,
(b) einer zweiten zur Schicht gemäß (a) wenigstens teilweise benachbarten Schicht aus einer Formmasse auf Basis eines linearen alternierenden Polyketonpolymers aus Kohlenmonoxid und einer äthylenisch ungesättigten Kohlenwasserstoffverbindung,
wobei die beiden Schichten Stoffschlüssig miteinander verbunden sind.

2. Mehrschichtverbund nach Anspruch 1, dadurch gekennzeichnet, daß das Polyamid ein Verhältnis von Amino- zu Caboxylendgruppen von größer als 3 aufweist.

3. Mehrschichtverbund nach den Ansprüchen 1 und 2, dadurch gekennzeichnet, daß das Polyamid Carboxyl-Endgruppen von 15 µÄq/g oder kleiner aufweist.

4. Mehrschichtverbund gemäß einem der Ansprüche 1 bis 3, dadurch gekennzeichnet, daß der Schmelzpunkt des Polyamids 265°C nicht übersteigt.

5. Mehrschichtverbund gemäß einem der Ansprüche 1 bis 4, dadurch gekennzeichnet, daß der Schmelzpunkt des Polyamids zwischen 150°C und 250°C insbesondere zwischen 175°C und 240°C liegt.

6. Mehrschichtverbund gemäß einem der vorgehenden Ansprüche, dadurch gekennzeichnet, daß das Polyamid aufgebaut ist aus Lactamen mit 6 bis 12 C-Atomen, α,ω-Aminocarbonsäuren mit 6 bis 12 C-Atomen, Dicarbonsäuren mit 2 bis 44 C-Atomen und aliphatischen und/oder cycloaliphatischen Diaminen mit 2 bis 12 C-Atomen, aus Dicarbonsäuren/Diaminsalzen zugänglichen aliphatischen und teilkristallinen und teilaromatischen amorphen Polyamiden, insbesondere aus Polyamid 12, aufgebaut ist.

7. Mehrschichtverbund nach Anspruch 1 dadurch gekennzeichnet, daß das lineare alternierende Polyketon wiederkehrende Einheiten der folgenden allgemeinen Formel I aufweist: 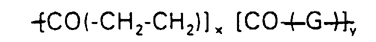 worin G abgeleitet ist von einem α-Olefin-Monomer mit wenigstens 3 Kohlenstoffatomen, die durch wenigstens eine oder mehrere ethylenisch ungesättigte Bindung(en) miteinander verbunden sind, x und y ganze Zahlen sind, und das Verhältnis von y zu x nicht mehr als 0,5 ist.

8. Mehrschichtverbund nach Anspruch 6, dadurch gekennzeichnet, daß das Polymer G in der Formel I Propylen ist und das Verhältnis y zu x zwischen 0,01 und 0,1 liegt.

9. Mehrschichtverbund nach den Ansprüchen 7 oder 8, dadurch gekennzeichnet, daß das lineare alternierende Copolymer aus Ethylen und Kohlenmonoxyd besteht, wobei ein weiteres Olefin wie Propylen oder Butylen einpolymerisiert sein kann.

10. Mehrschichtverbund nach einem der Ansprüche 1 bis 9, dadurch gekennzeichnet, daß eine weitere Schicht (c) enthalten ist, die unmittelbar der Schicht gemäß (a) benachbart ist und zwar bezogen auf die Schicht gemäß (b), wobei die Schichten gemäß (a) und (c) stoffschlüssig miteinander verbunden sind.

11. Mehrschichtverbund gemäß Anspruch 10, dadurch gekennzeichnet, daß die Schicht (c) einer Formmasse auf Basis eines Polyamids, insbesondere auf Basis eines Polyamid 12 enthält.

12. Mehrschichtverbund gemäß einem der vorhergehenden Ansprüche 1 bis 11, dadurch gekennzeichnet, daß eine der Schichten elektrisch leitfähig eingestellt ist und einen Oberflächenwiderstand von <10⁹ Ohm aufweist.

13. Mehrschichtverbund gemäß einem oder mehreren der vorherigen Ansprüche 1 bis 12, dadurch gekennzeichnet, daß er die Form einer Schlauch- oder Rohrleitung aufweist, wobei die Innenschicht eine Schicht (b) auf Basis einer Formmasse eines linearen alternierenden Polyketonpolymers ist und zur Schicht auf Basis einer Polyamid-Formmasse gemäß (a) benachbart ist.

14. Mehrschichtverbund gemäß Anpsruch 13, dadurch gekennzeichnet, daß die Mehrschicht-Polymerschlauch- oder Rohrleitung wenigstens in einem Teilbereich eine gewellte Wandung aufweist.

15. Mehrschicht-Polymer-Schlauch- oder Rohrleitung gemäß Anspruch 13 oder 14, dadurch gekennzeichnet, daß die Außenschicht die Schichtdicken von 0,2 bis 0,8mm und die Innenschicht Schicktdicken im Bereich von 0,01 bis 0,7mm aufweist.

16. Verwendung des Thermoplastischen Mehrschichtverbundes nach den Ansprüchen 1 bis 13 zur Herstellung von Formteilen oder von Hohlprofilen.
